# EUROPEAN PATENT APPLICATION

(11) **EP 4 300 679 A1**
(43) Date of publication of application: **03.01.2024**
(21) Application number: 22759850.5
(22) Date of filing: 28.02.2022
(51) Int. Cl.: H01M 50/209, H01M 50/233, H01M 50/262

(54) **ASSEMBLED BATTERY AND POWER SOURCE DEVICE**

(30) Priority: 26.02.2021 JP 2021031250
(71) Applicant: Vehicle Energy Japan Inc., Hitachinaka-shi Ibaraki 312-8505 (JP)
(72) Inventor: SENGOKU Eisuke, Hitachinaka-shi, Ibaraki 312-8505 (JP); TSUNAKI Takuro, Hitachinaka-shi, Ibaraki 312-8505 (JP); SUZUKI Takashi, Hitachinaka-shi, Ibaraki 312-8505 (JP); SUGAWARA Tatsuo, Hitachinaka-shi, Ibaraki 312-8505 (JP); KAWASAKI Tatsuhiko, Hitachinaka-shi, Ibaraki 312-8505 (JP)
(74) Representative: MERH-IP Matias Erny Reichl Hoffmann Patentanwälte PartG mbB
(86) International application number: PCT/JP2022/008264
(87) International publication number: WO 2022/181817

(57) **Abstract**

The first problem that the present invention addresses is achieving a highly reliable battery by suppressing the flow of a large current between a battery cell and a battery pack during a salt water test and thus suppressing a rapid reaction caused by the large current. The following configuration addresses this first problem. A battery assembly 100 has a plurality of battery cells (unit batteries) 101, a first end member 102 that retains the plurality of battery cells 101 from one end side in a layering direction, a second end member 103 that retains the same from the other end side in the layering direction, and a linking member 104 that links the first end member 102 with the second end member 103. The linking member 104, which binds the battery cells 101 in the layering direction, and a connection member, which is connected to a battery pack, are configured so as to be insulated from one another.

## Description

### BACKGROUND OF THE INVENTION

### (1) Field of the Invention

The present invention relates to a battery cell assembly in which a plurality of battery cells are stacked.

As to these kinds of battery assemblies, patent document 1 discloses battery assemblies including a plurality of battery cells, bus bars attached to those battery cells, and a plurality of covers which cover those bus bars to protect the same.

Patent document 2 discloses a plurality of battery cells being fastened in one direction by a linking instrument, which is formed from steel.

### [Prior Technical Document]

### [Patent Document]

Patent document 1: WO 2012-164635
Patent document 2: WO 2015-111493

### SUMMARY OF THE INVENTION

### Purpose of the Invention

A structure, in which a plurality of battery assemblies are disposed in a metal package, is called as a battery pack. When the battery pack is dipped in the salt water for testing, there is a possibility that a short current occurs and a rapid reaction occurs between the battery assemblies and a package of the battery pack. A first purpose of the present invention is to suppress a large short current between the package of the battery pack and the battery cells, and to suppress a rapid reaction even in a case where the battery pack is dipped in the salt water, and consequently to realize a battery of high reliability.

In the battery assembly disclosed in patent document 1, a total length is changed when the number of the battery cells are changed by requirement, therefore, a length of the bus bar case and a gas hose in the stacking direction of the battery cells or positions of terminals for power in and out are changed.

A second purpose of the present invention is to solve such problem, consequently, a purpose of the invention is to realize a structure that can minimize a change in those elements even when the number of the battery cells in a battery assembly is changed.

### Means to attain the purpose of the invention

A means to attain the first purpose is as follows: A battery assembly including: a battery body having a plurality battery cells stacked in a stacking direction, a pair of end components, including insulating material, disposed at both ends of the battery body, and a pair of side plates, including metal, disposed at both sides of the battery body, connecting with the end components; in which the end component includes a fixing portion, which can accommodate a fixing body to install the battery assembly to an installing entity, and the fixing portion and the side plate are not electrically connected to each other.

A means to attain the second purpose is as follows: A battery assembly including: a plurality of battery cells stacked in a stacking direction, a first end component, which holds the plurality of battery cells in the stacking direction from one side, a second end component, which holds the plurality of battery cells in the stacking direction from another side, and a linking component to link the first end component with the second end component, in which the first end component has a projection, which projects from a connection portion, between the first end component and the linking component, to the battery cell in a predetermined length, and the predetermined length is same or larger than a thickness of the battery cell in the stacking direction.

### Effects of the invention

A rapid reaction between the battery cell and the package of the package cell can be avoided by mitigating a short current between the battery cell and the package of the package cell even when the battery pack is dipped in the salt water. In addition, the reaction can be confined in the battery pack even when a rapid reaction occurs. As to another purpose, changes in the elements can be kept minimum even when the number of the battery cells is changed. Further characteristics of the present invention will be clarified by the following specification and the drawings. In the meantime, other purposes, structures and effects in addition to the above description are explained in the embodiments below.

### BRIEF DESCRIPTION OF THE DRAWINGS

Figure 1 is a perspective view of a battery cell according to embodiment 1;
Figure 2 is a perspective view of a battery assembly according to embodiment 1;
Figure 3 is an exploded perspective view of the battery assembly according to embodiment 1;
Figure 4 is a plan view of a block of the battery assembly according to embodiment 1;
Figure 5 is a plan view of a bus bar case assembly of the battery assembly according to embodiment 1;
Figure 6 is a perspective view of a battery assembly according to embodiment 2;
Figure 7 is an exploded perspective view of the battery assembly according to embodiment 2;
Figure 8 is a plan view of a block of the battery assembly according to embodiment 2;
Figure 9 is an exploded perspective view of a battery assembly according to embodiment 3;
Figure 10 is an exploded perspective view of a battery assembly according to embodiment 4;
Figure 11 is a perspective view of a battery assembly according to embodiment 5;
Figure 12 is an exploded perspective view of a battery cell according to embodiment 5;
Figure 13 is a plan view of a power source device including two stacked battery assemblies;
Figure 14 is a plan view of a power source device including four stacked battery assemblies;
Figure 15 is a conceptual plan view of one embodiment according to the present invention;
Figure 16 is a conceptual plan view of another embodiment according to the present invention;
Figure 17 is a perspective view of the battery assembly according to embodiment 2;
Figure 18 is an exploded perspective view in which the battery assembly is separated into a block and a bus bar case assembly;
Figure 19 is an exploded perspective view of the block;
Figure 20 is a perspective view of an end spacer;
Figure 21 is a side view of the block according to figure 19;
Figure 22 is a cross sectional view of figure 21 along the line A-A;
Figure 23 is a front view of the spacer;
Figure 24 is a cross sectional view of another structure in which the battery body is fixed in the stacking direction by a side plate and the end spacer;
Figure 25 is a cross sectional view of yet another structure in which the battery body is fixed in the stacking direction by the side plate and the end spacer; and
Figure 26 is a cross sectional view of further yet another structure in which the battery body is fixed in the stacking direction by the side plate and the end spacer.

### DETAILED DESCRIPTION OF THE PREFERRED EMBODIMENTS

The present invention is explained according to embodiment 1 and embodiment 2. Embodiment 1 relates to a structure in which a change in elements is made minimum even when the number of the battery cells is changed. Embodiment 2 relates to a structure in which a rapid reaction is suppressed by mitigating a short current between the battery cells and the battery package even when the battery assemblies are dipped in the salt water.

### Embodiment 1

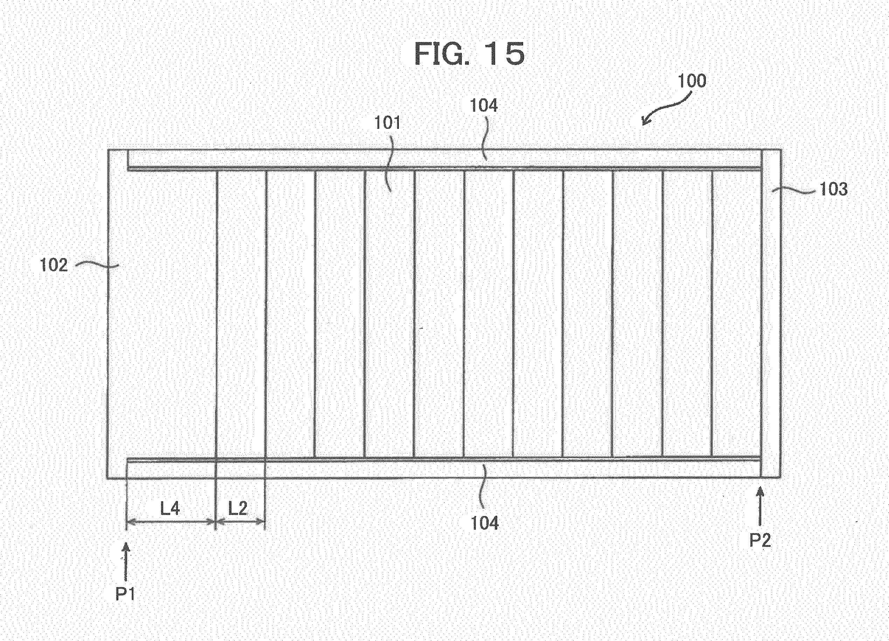

Figure 15 is a conceptual plan view of a battery assembly according to one embodiment of the present invention.

The battery assembly 100 includes a plurality of battery cells 101, a first end member 102 to hold those plurality of battery cells 101 in stacking direction from one side, a second end member 103 to hold those plurality of battery cells 101 in stacking direction from another side, and a linking member 104 to link the first end member 102 with the second endmember 103. The first end member 102 projects in the stacking direction by a length of L4 to the battery cell 101 from a connection position P1 with the linking member 104; the length of L4 is larger than a thickness L2 of one battery cell in the stacking direction. In the meantime, item P2 on figure 15 shows a position of connection between the linking member 104 and the second end member 103.

According to the battery assembly 100 of figure 15, battery assemblies of the same outer shape can be formed, even the numbers of the battery cells 101 are different in each of the assemblies, by using a first endmember which has a different thickness instead of normal fist endmember 102. For example, one battery cell 101 can be increased in the battery assembly by using a first end member, in which a projection length L4 is thinner by a thickness of one battery cell. As the same token, one battery cell 101 can be decreased in the battery assembly by using a first end member 102, in which a projection length L4 is thicker by a thickness of one battery cell.

In those battery assemblies, numbers of the battery cells are different, however, the same linking member 104 and the same second end member 103 are used; therefore, a total size is not changed and outer shapes of the battery assemblies are the same. Therefore, the elements as the bus bar case, gas hose and a plurality of covers are not necessary to be made for each of the battery assemblies having pieces of the battery cells, instead, those elements can be used in common. In addition, even the numbers of battery cells are changed, manufacturing process and assembling jigs are not necessary to be changed; and settings of the machines are not necessary to be hanged; and, the manufacturing machines can be used in common. In addition, problems of an increase in kinds of elements and an increase in work load in management can be also suppressed.

Further, there is a case that electric cars of the same model have different battery specifications. For example, battery assemblies including different numbers of batteries are installed in different electric cars of the same mode. In that case the car can accommodate the battery assembly having a different number of battery cells without changing the structure of the car or with little change in the structure of the car, and thus, can form a common platform. In addition, a layout of wiring, and a layout of gas pipes, which exhausts gas from the battery cell, are nor necessary to be changed, and thus, common car elements can be used in those cars. Further, when the number of the battery cells on the car is increased according to a model change of cars, or the number of the battery cells on the car is decreased according to an increase in performance of the battery cells, it can be counter measured without changing a size of the battery assemblies.

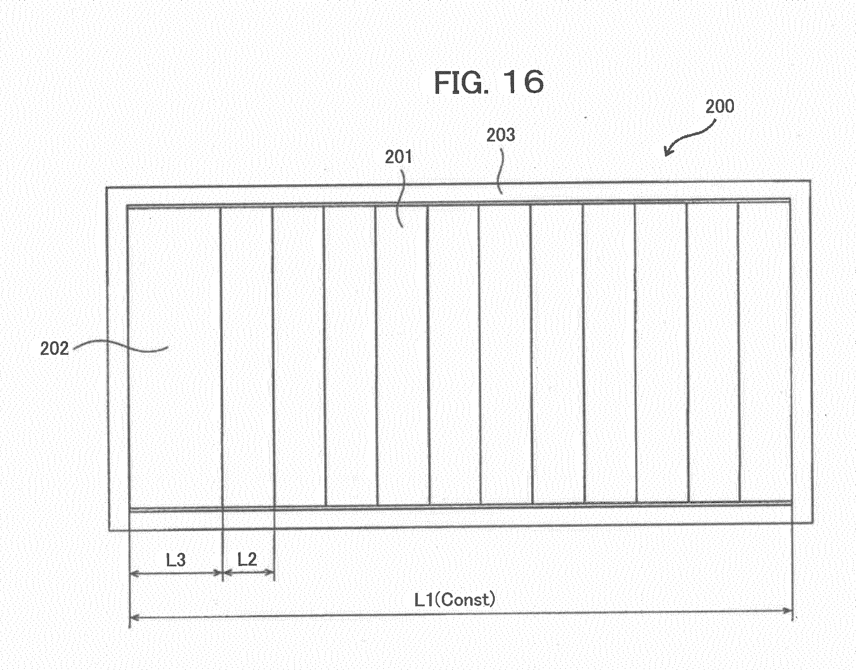

Figure 16 is a conceptual plan view of another example according to the present invention.

The battery cell assembly 200 includes a stacked battery cells 201, spaces 202 stacked with those battery cells 201, and a holding member203 to hold those battery cells 201 and spacers 202 stacked in the stacking direction. The holing member 203, having a certain length of L1, holds a plurality of battery cells 201 and spacers 202 in a stacking direction. A thickness L3 of the spacer 202 in the stacking direction is larger than a thickness L2 of the battery cell 201 in the stacking direction.

The battery assembly 200 according to figure 16 can adapt a change in number of the battery cells 201 only by substituting a spacer 202 by another spacer 202 of different thickness without changing the outer shape of the battery assembly 200. For example, a battery assembly having one battery cell 201 more can be formed by using a thinner spacer 202 by a thickness of one battery cell 201. As the same token, a battery assembly having one battery cell 201 less can be formed by using a thicker spacer 202 by a thickness of one battery cell 201.

Those battery assemblies have different numbers in battery cells however, a total size of the battery assembly and an outer shape are the same as the embodiment of figure 15. Therefore, effect of the structure is the same as the effect of the structure of figure 15.

Herein after, the battery assembly 10 according to first example of the present invention through the battery assembly 10D according to fifth example of the present invention are explained referring to figures.

### (First embodiment)

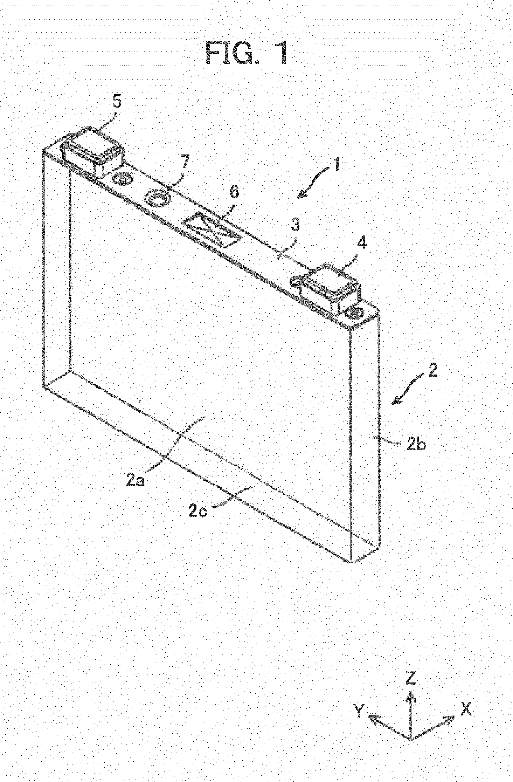

At the outset, a battery cell 1 which constitutes a battery assembly 10 of the first embodiment is explained referring to drawings. The battery cell 1, as shown in figure 1, includes a battery cell can 2, a battery cover 3, a positive terminal 4, a negative terminal 5, a gas exhausting valve 6, an injection plug 7, and elements not shown in the figure as electrolyte, charge and discharge elements, and an insulating case. A secondary battery cell, which can be charged and discharged, as e.g. a lithium secondary battery cell, is used for the battery cell 1. The battery cell 1 according to the first embodiment corresponds to a single battery cell 1 relating to the battery assembly according to one embodiment of the present invention.

The battery can 2, which is rectangular having an opening in one side of the inner space, is formed from aluminum or aluminum alloy. The battery can 2 have a pair of side plates 2a of large areas opposing to each other, a pair of side plates 2b of small areas opposing to each other, an opening and an opposing bottom plate 2c. A charge and discharge elements are contained, covered with an insulating case, in the battery can 2, and electrolyte is filled. A positive electrode of the charge and discharge elements is connected to the positive terminal 4, and a negative electrode of the charge and discharge elements is connected to the negative terminal 5.

The battery cover 3, which is rectangle plate as same as the bottom plate 2c, and formed from aluminum or aluminum alloy, covers an opening of the battery can 2. The battery cover 3 is joined to the battery can 2 by joining means such as laser welding. An injection hole, not shown in the drawing, is formed in the battery cover 3; the electrolyte is injected through the injection hole and the injection hole is closed with injection plug 7.

A gas exhausting valve 6 is formed at a center of the battery cell cover 3. The gas exhausting valve 6 exhausts gas from inside of the can to lower the pressure in the battery can 2; namely, the gas exhausting valve 6 breaks when inner pressure of the battery can 2 becomes high due to generation of gas by heating due to an abnormal like over charging, and reaches to predetermined pressure to exhausts gas to the outside.

Through holes are formed at one edge region and another edge region of the battery cover 3, which are not drawn in the figure, and the positive terminal 4 and the negative terminal 5 are attached. The exposed potions of the positive terminal 4 and the negative terminal 5 are rectangular having flat tops. The power generated in the battery cell 1 is supplied to outer apparatuses through the positive terminal 4 or the negative terminal 5, or the power generated outside of the battery cell 1 is supplied to the charge and discharged element to charge the battery cell.

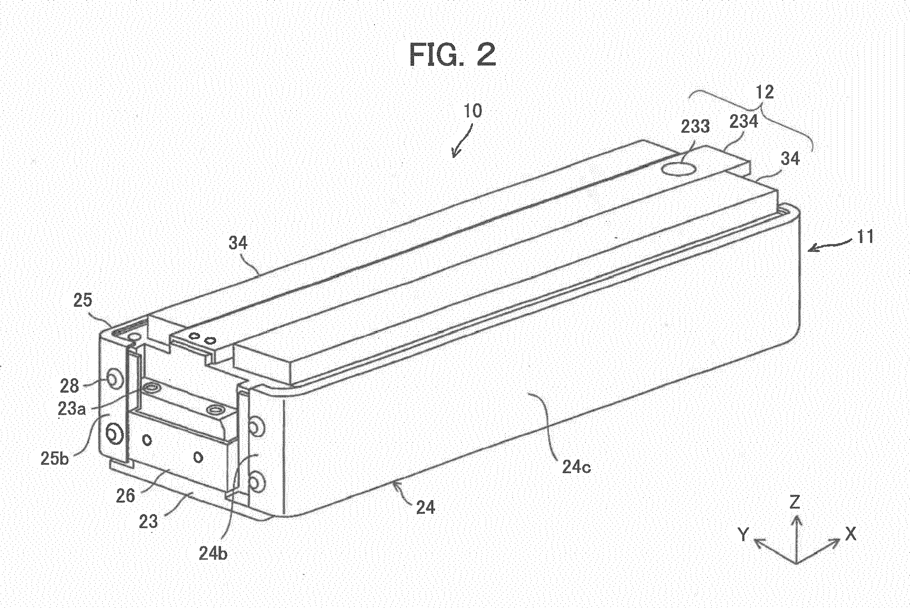

The battery assembly 10 is used as a power for the motor in the hybrid car, which is moved by internal combustion engine and motor, and the electric car, which is moved by motor. The battery assembly 10 includes, as shown in figure 2, the block 11 and the bus bar assembly 12.

### (Block 11)

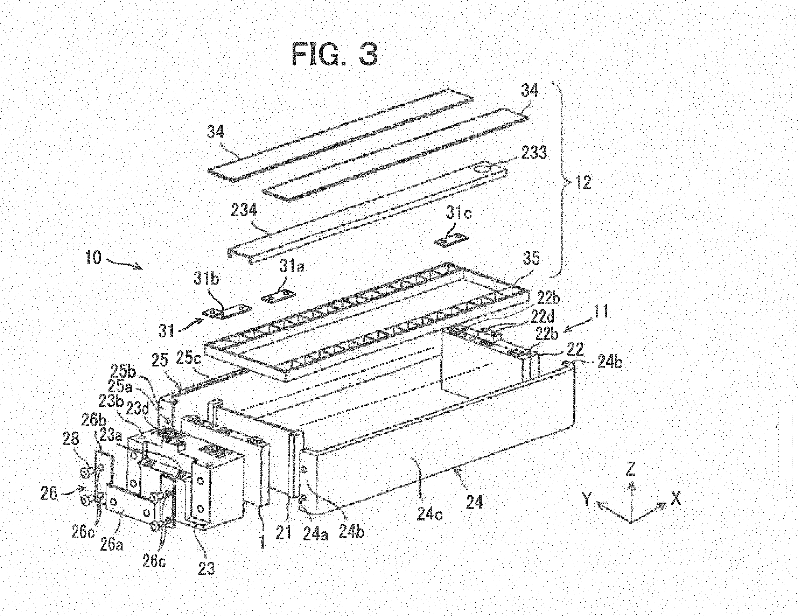

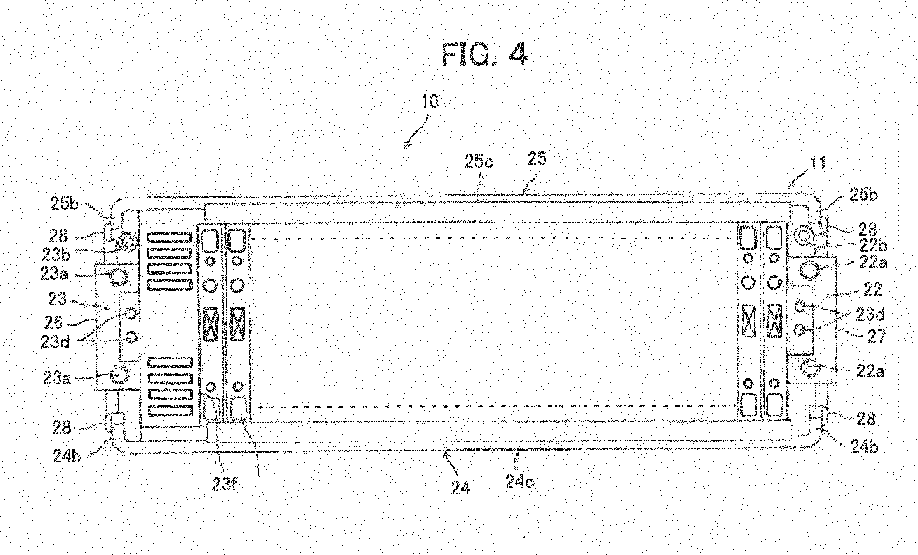

The block 11 includes, as shown in figures 3 and 4, a stacked body of a plurality of the battery cells 1 and the spacers 21, a first end spacer 22, a second end spacer 23, a pair of the side rails 24 and 25, a pair of the end plates 26 and 27, and a plurality of the bolts 28. The block 11 is a stacked assembly in which a stacked battery cells 1 and spacers 21, and other constituting elements are unitized. In block 11, a length of a pair of the side rails 24 and 25, and a length of a pair of the bus case assembly 12 are constant; a maximum number of the battery cells" 1 can be held when a regular end spacer, which is not drawn, is used instead of the second end spacer 23: while less number than the maximum of the battery cells 1 are held when a second end spacer 23 is used. That is to say, the block 11 can change the numbers of the battery cells 1 by changing a thickness of the end spacer 23 without changing the length of the block 11.

The spacers 21, which are formed from insulating resin, are alternatively stacked with the adjacent cells 1 in x direction. Each of the spacers 21 has a recess corresponding to the shape of the battery cell 1; the battery cell 1 is held in the recess and is fixed in y direction and in z direction. A craw is formed on the top of the spacer 21 in z direction, and is to match with another craw formed on the bus bar case 35.

The first end spacer 22 is formed from insulating resin and is formed from harder material compared with the spacer 21; the first end spacer 22 is disposed opposing to a battery cell 1 located at an end position in stacking direction. The first end spacer 22 has a recess corresponding to the shape of the battery cell 1 at the opposing surface; the recess holds the battery cell 1 and fix it in y direction and in z direction. The fixing bolt hole 22a and the negative connecting terminal 22b are formed in the first end spacer 22 at the side at which the first end spacer 22 opposes to the end plate 27. The fixing bolt hole 22d for fixing several constituting elements is formed on the top of the first end spacer 22 in z direction.

The second end spacer 23 is formed from insulating resin and is formed from harder material compared with the spacer 21; the second end spacer 23 is disposed opposing to another battery cell 1 located at another end position in stacking direction. In the end spacer 23, as shown in figure 3, a plurality of rectangle lightning holes are formed to suppress a deformation of the end spacer 23 due to a recess, or so called sink marks, after forming by e.g. die cast. The second end spacer 23 has a recess corresponding to the shape of the battery cell 1 at the opposing surface; the recess holds the battery cell 1 and fix it in y direction and in z direction.

The fixing bolt hole 23a, the positive connecting terminal 23b and the fixing hole 23d for a gas exhausting duct are formed on the second end spacer 23 at the side at which the first end spacer 23 opposes to the end plate 26. In the meantime, the first end spacer 22 and the second end spacer 23 of the first embodiment correspond to the end members of the present invention, the fixing bolt holes 22a and 23a correspond to the fixing portion which fixes the battery assembly to an installation position. The positive connection terminal 23b and the negative connection terminal 22b, which electrically connect with the battery cells, and correspond to the connecting terminal of the present invention, and the fixing hole 23d for a gas exhausting duct corresponds to the fixing portion for of the exhausting duct, which exhausts gas generated in the battery cell to outside of the battery assembly.

A distance between the fixing bolt hole 23a and an opposing surface 23f to the battery cell 1 in the second spacer 23 of the first embodiment is the same or larger than a thickness of the battery cell 1 in the stacking direction. In this embodiment, a thickness of the second end spacer 23 is made larger than a thickness of a regular size end component (regular end component), which is used when the number of the battery cells 1 are x in the stacking direction, in a value when n pieces of the battery cells are stacked. The number x is a maximum number of the battery cells 1 that can be stacked in the block 11, n is an integer less than x, and n is preferably to be an even number to minimize a change of constituting elements of the battery assembly. That is to say, n<x. A thickness of n pieces of battery cells 1 includes a thickness of the spacer 21 sandwiched between the battery cells 1.

As to the second end spacer 23, a distance between the opposing surface 23f to the battery cell 1 and one of the elements of the fixing bolt hole 23a, the positive connecting terminal 23b, and the fixing hole 23d for the gas exhausting duct is larger than the distances when the regular end component is used in a value of integer multiple of the thickness of the battery cell 1. For example, when a thickness of the second end spacer 23 is thicker than a thickness of the regular end component in a twice of thickness of the battery cells 1, a battery assembly having two battery cells less can be formed; when the block 11 has 24 battery cells 1 when a regular end component is used, the block 11 can have 22 battery cells 1 when the second end spacer 23 is used instead of the regular end spacer.

A total length L24 of a regular end component and 24 battery cells 1 including spacers, and a total length L22 of the second end spacer 23, which is thicker than the regular end component by thickness of two battery cells 1, and a total length of 22 battery cells 1 including spacers are the same, namely, L24=L22. Positions of the elements of the fixing bolt hole 23a, the positive connecting terminal 23b, and the fixing hole 23d for the gas exhausting duct are the same between when the second end spacer 23 is used and when the regular end component is used. As a result, a design change in a size or shape in the components in the block 11 can be avoided except the second end spacer 23, even the number of the battery cells is decreased by two and becomes 22 pieces in the block 11.

By the way, in this embodiment, it has been explained that the second end spacer 23 is thicker than a thickness of the regular end component by at least one battery cell 1; however, it is possible to use the structure that the first end spacer 22 is thicker than a regular end component by a thickness of at least one battery cell 1, and to use the regular end component instead of the second end spacer 23. Further, both of the first end spacer 22 and the second end spacer 23 can be thicker than a regular end component by a thickness of at least one battery cell 1. In this case, the first end spacer 22 in the first embodiment corresponds to a first end plate or second end plate in one embodiment of the present invention; the second end spacer 23 in the first embodiment corresponds to a first end plate or a second end plate in one embodiment of the present invention.

As shown in figure 3, the side rail 24, which is formed from metal, includes a main rail 24c, which extends in x direction, and a bent portion 24b, which bends in y direction at both end portions and oppose to each other, each of the bent portions 24b has a fixing hole 24a penetrating in x direction. The bent portions 24b oppose to the first end spacer 22 and the second end spacer 23 from outside in the stacking direction, and cover a part of the first end spacer 22 and a part of the second end spacer 23.

The side rail holds the first end spacer 22, a plurality of battery cells 1, a plurality of spacers 21, and the second end spacer 23, and fastens them in the stacking direction. The bolts 28 are inserted in the fixing holes 24a in the bent portion 24b, and the side rail 24 is fixed to the end plates 26 and 27. The bolts 28 are formed from metal in most cases.

The side rail 24 has a length as that 22 battery cells 1 are stacked in stacking direction when the second end spacer 23 is used. The side rail 25 is the same shape as the side rail 24 in mirror image. The side rail 25 is formed from metal as the side rail 24, and has a same effects as the side rail 24. The side rail 25 is disposed opposing to the side rail 24 via the stacked battery cells 1; the side rail 25 has a main rail 25c and bent portions 25b, which is bent in y direction at both end portions of the side rail 25. The bent portion 25b has a fixing hole 25a in which bolts 28 are inserted. In the meantime, a pair of the side rails 24 and 25 correspond to side components of the battery assembly according to one embodiment of the present invention.

The end plate 26 is formed from plate metal and is formed by sheet metal processing, and is disposed adjacent to the second end spacer 23. The end plate 26 has a flat portion 26a, in which holes for alignment with the second end spacer 23, and the fixing portion 26b, which fixes the side rail 24 and the side rail 25. The fixing portion 26b has fixing holes 26c in which bolts 28 are inserted. The fixing portion 26b has a stepped recessed portion with respect to the flat portion 26a in the stacking direction so that a top of the bolt does not project from the surface of the flat portion 26a when bent portions 24b and 25b of the side rail 24 and side rail 25 are fixed to the end plate 26. A nut is attached at the fixing portion 26b. The fixing portion 26b corresponds to the connection portion with "the side components of the battery assembly according to one embodiment of the present invention.

The end plate 27 is formed as same manufacturing method as the end plate 26, and is disposed adjacent to the first end spacer 22, as shown in figure 4. The end plate 27 and the bent portions 24b and 25b of each of the side rail 24 and the side rail 25 are connected to each other by bolts 28. In the meantime, a pair of end plates 26 and 27 correspond to end components of one embodiment of the battery assembly of one embodiment of the present invention.

### (Bus bar case assembly 12)

As shown in figure 3, the bus bar case assembly 12 includes bus bar 31, harness, gas exhaustion duct 234, a plurality of covers 34, and the bus bar case 35. The bus bar case assembly 12 has functions as connecting the terminals between the battery cells 1, connecting between the controller and the battery cells 1, monitoring the voltage and the temperature, and exhaustion of gas.

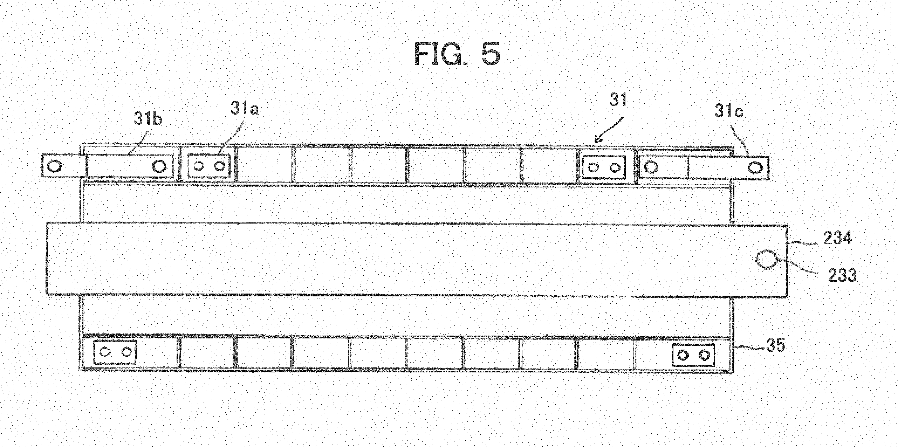

As shown in figure 5, the bus bar 31 incudes between cells bus bar 31a, negative electrode bus bar 31b and positive electrode bus bar 31c; each of the elements are contained in the bus bar case 35. The between cells bus bar 31a connects the positive terminal 4 with the negative terminal 5 of the battery cells 1. The negative terminal bus bar 31b is connected to the second end spacer 23, and the positive terminal bus bar 31c is connected to the first end spacer 22. In the meantime, a length of the negative terminal bus bar 31b in the stacking direction of the battery cells 1 is longer than that when a regular end component is used.

The harness includes the terminals, the wirings, the temperature sensor portion, and the connector. The terminals electrically connect the bus bar 31 with the harness via the wirings. The temperature sensor portion contacts the battery cover 3 to detect the temperature of the battery cover 3 and outputs the result. The connector portions connect with each of the elements, and connect each of the elements with a controller, which is not shown in the figure. Each of elements is installed in the bus bar case 35.

The gas exhaustion duct 234 has a gas exhaustion opening 233; the gas exhausted from the gas exhaustion valve 108b is gathered to a center in y direction of the bus bar case 30 in isolation, then, is exhausted from the gas exhaustion opening 233. The gas exhaustion duct 234 is fixed to the first end spacer 22 and the second end spacer 23 by screws at the both ends of the gas exhaustion duct 234. A plurality of covers 34 insulate and protect the elements in the bus bar assembly 12, and are disposed as to cover the bus bar 31 and the harness. Each of the covers 34 is matched to the bus bar case 35 and is fixed thereto.

The bus bar case 35 includes a plurality of frames arranged in stacking direction of the battery cells 1; each of the frames contains between cells bus bar 31a, the negative electrode bus bar 31b or the positive electrode bus bar 31c. The bus bar case 35 has a plurality of craws, which match the craws of the spacers 21, the first end spacer 22 and the second end spacer 23 formed on the tops in z direction, thus, the bus bar case assembly 12 is fixed to the block 11.

The effects of the battery assembly 10 according to the first embodiment are explained below.

The battery assembly 10 of the first embodiment includes the second end spacer 23; a thickness of the second end spacer 23 is thicker in an integer n multiples of a thickness of the battery cell 1 than a regular end component; x pieces of battery cells 1 are included in the battery assembly 10 when the regular end component is used. A total length of the side rail 24, 25 are not changed not withstanding a change of the number of the battery cells. In addition, positions of the fixing bolt holes 23a, the positive connection terminal 23b and the fixing hole 23d for gas exhaustion duct are not changed.

As a result, a change in the number of the battery cells in the battery assembly 10 can be counter measured by changing only two components of the second end spacer 23 and the negative bus bar 31b, which constitutes bus bar case assembly 12. Other components are not necessary to be changed. In the meantime, a change in bus bar case 35 is not needed by elongating a part. of the negative bus bar 31b. According to the present embodiment, a combination of a battery assembly having 24 pieces of the battery cells 1 in a block 11 and a battery assembly having 22 pieces of the battery cells 1 in a block 11 is easily realized.

In the conventional battery assembly, elements constituting the battery assembly are necessary to be newly formed when the number of battery cells are changed. In this case, assembling processes or jigs are changed; in addition, settings of the manufacturing machines are also necessary in each of the changes. In contrast, according to the first embodiment, a change of elements of the battery assembly 10 can be limited in minimum. Further, jigs and manufacturing machines can be used in common, and a change in manufacturing process can be minimized; thus, a rising of managing costs as e.g. controlling elements, and so forth can be suppressed.

The end plate 26 is formed by sheet processing and a thickness of the second end spacer 23 is made larger in the battery assembly according to the first embodiment. The structure of the battery assembly according to the first embodiment can be applied to other structures. Other structures are explained as a second embodiment 10A through fifth embodiment 10D. By the way, the same notations are used for the elements as the first embodiment in embodiments 10A through 10D.

### (Second embodiment)

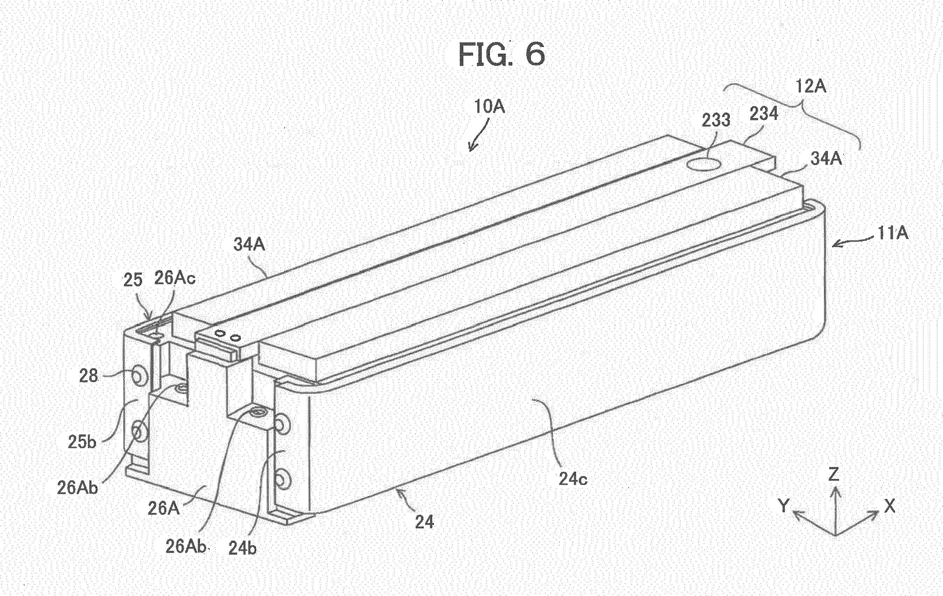

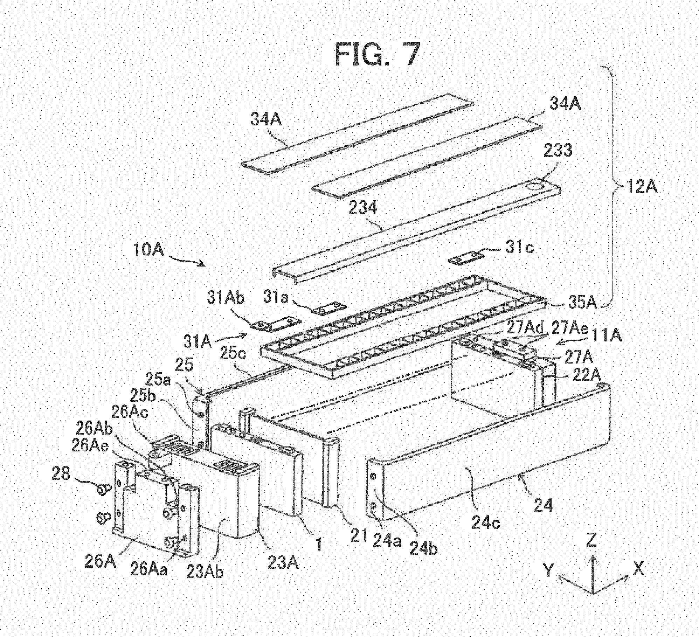

Figure 6 is a perspective view of the battery cell assembly according to the second embodiment and figure 7 is an exploded perspective view of the battery cell assembly according to the second embodiment. The feature of the second embodiment is that the fixing bolt hole 26Ab and the fixing hole 26Ae of the gas exhaustion duct are formed in the end plate 26A, not in the end spacer 23A.

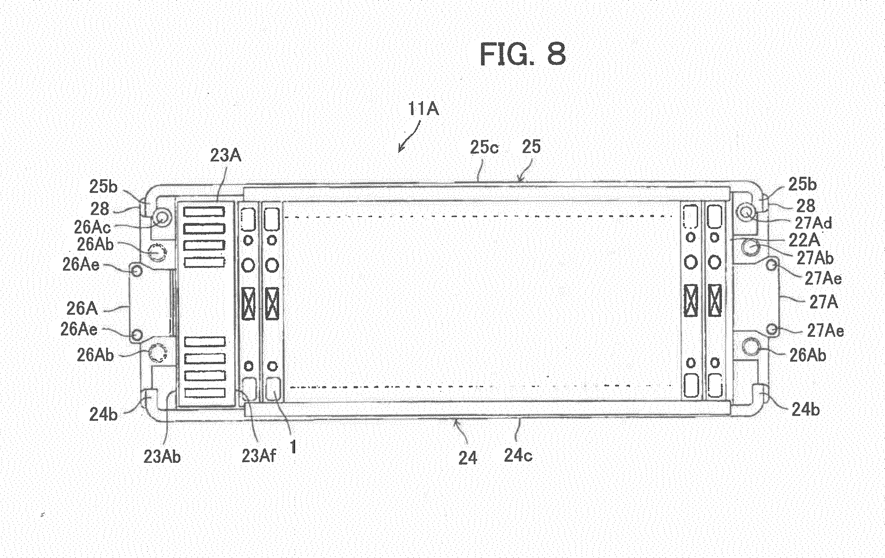

As shown in figure 6, the battery assembly 10A according to the second embodiment is formed from the block 11A and the bus bar case assembly 12A. As shown in figures 7 and 8, the block 11A includes a plurality of battery cells 1, a plurality of spacers 21, the first end spacer 22A, the second end spacer 23A, a pair of the side rails 24 and 25, a pair of end plates 26A and 27A, and a plurality of bolts 28.

The first end spacer 22A has a flat surface opposing to the end plate 27A in one surface in a stacking direction, a recess is formed at opposite side, in the stacking direction, of the first end spacer 22A to hold the battery cell 1, and fixes the movement of the battery cell 1 in y direction and z direction. The second end spacer 23A has a flat surface opposing to the end plate 26A in one surface in opposing direction to the stacking direction, a recess is formed at opposite side, in the stacking direction, of the first end spacer to hold the battery cell 1, and fixes the movement of the battery cell 1 in y direction and z direction.

As to the second end spacer 23A, a distance between the positive connection terminal 26A and the opposing surface 23Af, which opposes to the battery cell 1, in other words, a thickness of the second end spacer 23A is the same or larger than a thickness of the battery cell 1 on a stacking direction. In the present embodiment, a thickness of the second end spacer 23A is thicker than a thickness of the regular end component, which is used when the number of the battery cells is x, by , a thickness of n times of the battery cells in the stacking direction. The regular end component can use the same shape as the first end spacer 22A.

For example, if two battery cells are desired to be decreased in a block 11, which can include 24 battery cells 1 as maximum, it is attainable by increasing a thickness of the second end' spacer 23A by a thickness that two battery cells 1 are stacked. Since the second end spacer 23A has an increased thickness equivalent to total thickness of two battery cells 1 and two spacers 21, a position of the endplate 26A is not changed between when 24 battery cells 1 are included and when 22 battery cells 1 are included. As a result, design changes in elements in sizes, shapes and so forth in the block 11 are not necessary other than the end spacer 23 even when the numbers in battery cells are changed from e.g. 24 to 22.

In contrast, while the end plate 26 in the first embodiment is formed from a plate by sheet processing, the end plate 26A in the present embodiment is formed from a plate by aluminum die cast. The endplate 26A is disposed in x direction, which is a stacking direction with respect to the second end spacer 23A. The end plate 26A has a fixing portion 26Aa, in which fixing bolt holes are formed to fix the side rail 24 and the side rail 25.

The fixing bolt hole 26Ab and the fixing hole 26Ae for gas exhaustion duct are formed in the endplate 26A. In the meantime, the fixing bolt hole 26Ab in the second embodiment corresponds to a fixing portion of the present invention to fix the battery assembly to the installing position. The fixing hole 26Ae for gas exhaustion duct corresponds to an exhaustion means to exhaust gas generated in the battery cell 1 to outside of the battery assembly.

The end plate 27A is formed as the same method as the endplate 26A is made; the end plate 27A is disposed adjacent to the first end spacer 22A as shown in figure 8. The fixing bolt hole 27Ab to fix the battery assembly 10A, the negative connecting terminal 27Ad, and the fixing hole 27Ae for gas exhaustion duct are formed in the end plate 27A. The end plate 27A and bent portions of 24b and 25b of the side rail 24 and the side rail 25 are fastened with bolts 28 to each other. In the meantime, a pair of the end plates 26A and 27A in the second embodiment correspond to the end components of the battery assembly according to one embodiment of the present invention.

As shown in figures 7 and 8, the bus bar case assembly 12A includes the bus bar 31A, the harness, the gas exhaustion duct 234 having the gas exhaustion opening 233, a plurality of covers 34A and the bus bar case 35A. As the same as the first embodiment, even when the number of the stacked battery cells 1 is changed from x to x-2, namely two battery cells 1 decreased, the change is only the negative bus bar 31Ab among the bus bars 31A. The harness, the cover 34A and the bus bar case 35A of the present embodiment have same functions as the harness, the cover 34 and the bus ' bar case 35 of the first embodiment.

Changes in the structure according to a change in the number of the battery cells 1 in the battery assembly 10A in the second embodiment are only the second end spacer 23A and the negative electrode bus bar 31Ab, thus the same functions are obtained as in the battery assembly 10 in the first embodiment

### (Third embodiment)

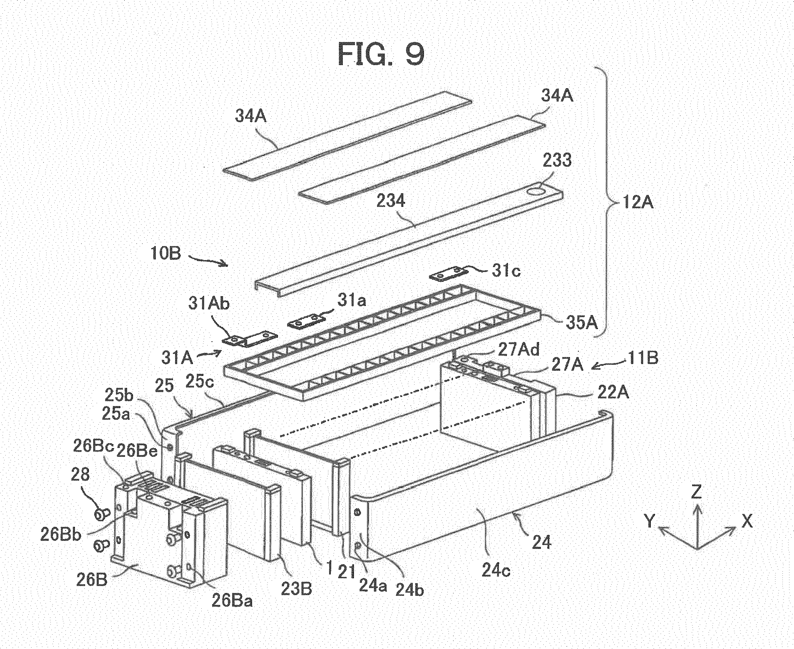

Figure 9 is an exploded perspective view of the battery assembly according to the third embodiment. The feature of the present embodiment is that: a thickness of the second end spacer 23B of the third embodiment is thinner than a thickness of the second end spacer 23A of the second embodiment; and a thickness of the end plate 26B of the third embodiment is thicker than a thickness of the end plate 26A of the second embodiment.

As shown in figure 9, the battery assembly 10B according to the third embodiment is formed from the block 11B and the bus bar case assembly 12A, which is the same as the bus bar case assembly 12A of the second embodiment. As to the block 11B, the end plate 26B and the end plate 27A are formed by aluminum die cast as the block 11A of the battery assembly 10A of the second embodiment; however, shapes of the second end spacer 23B and the endplate 26B are different from the block 11A of the second embodiment.

The second end spacer 23B is regular size, in which a thickness is not changed. A recess, which fits the shape of the battery cell, is formed in one side of the second end spacer 23B with respect to the stacking direction, another side, with respect to the stacking direction, of the second end spacer 23B, which opposes to the end plate 26B, is flat.

As to the end plate 26B, a distance between the fixing bolt hole 26Bb and opposing surface, which opposes to the second end spacer 23B, is the same or more compared with a thickness of the battery cell 1 in the stacking direction. In the present embodiment, a thickness of the end plate 26B is thicker than a thickness of the regular end component, which is used when the number of the battery cells is x, by a thickness of n times of the battery cells 1 in the stacking direction. The endplate 26B is disposed adjacent to the second end spacer 26B. The end plate 26B has a fixing portion 26Ba, in which a fixing bolt holes to fix the side rail 24 and the side rail 25 are formed. The end plate 26B also includes the fixing bolt holes 26Bb, the positive electrode connecting terminal 26Bc, the negative electrode connecting terminal 26Bd, and the fixing hole 26Be for the gas exhausting duct.

For example, if two battery cells 1 are desired to be decreased so as to be 22 battery cells 1 in a block 11, which can include 24 battery cells as maximum, it is attainable by increasing a thickness of the second end spacer 23A by a thickness that two battery cells are stacked. Consequently, positions of the fixing bolt holes 26Bb, the positive electrode connecting terminal 26Bc, the negative electrode connecting terminal 26Bd, and the fixing hole 26Be for the gas exhausting duct in the end plate 26B are not changed between the structure having 24 battery cells 1 and the structure having 22 battery cells 1. As a result, a design change is not necessary for the elements of structures except the end plate 26B even the number of the battery cells is changed from 24 to 22 in the block 11.

### (Fourth embodiment)

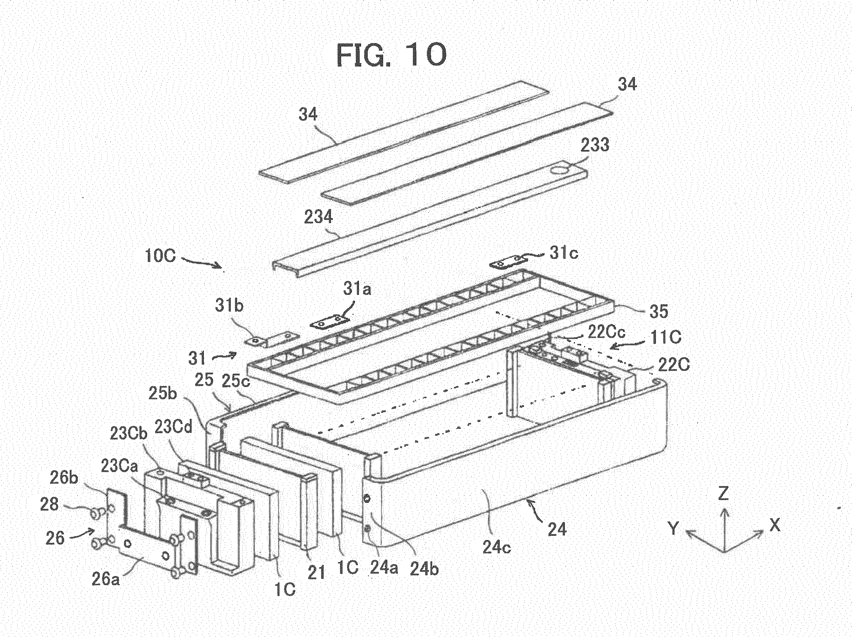

Figure 10 is an exploded perspective view of the battery assembly according to the fourth embodiment. The feature of the present embodiment is that the block 11C includes dummy cells 1C among a plurality of the battery cells 1 in the block 11C.

The battery assembly 10C according the fourth embodiment includes the block 11C as shown in figure 10. The second end spacer 23C and the end plate 26, which are end components of the block 11C, are regular size, which is used when a maximum number x of the battery cells 1 are included in the block 11C.

The dummy cell 1C has a same outer size as the battery cell 1, and is formed from e.g. aluminum alloy. The dummy cells 1C, corresponding to n pieces of the battery cells 1, are disposed adjacent to the battery cells 1. For example, when two battery cells are decreased from the block 11C of the basic structure having x battery cells 1, namely, the number of the battery cells 1 becomes (x-2), then, two dummy cells 1C are stacked instead of the two battery cells 1. As shown in figure 10, two dummy cells 1C are disposed as opposing to each other sandwiching the spacer 21.

In the battery assembly 10C according to the fourth embodiment, changes of structures are only dummy cells 1C and the negative bus bar 31b when the number of the battery cells 1 is changed; therefore, the same effect as the first embodiment can be attainable. For example, if two battery cells 1 are desired to be decreased so as to be 22 battery cells 1 in a block 11, which can include 24 battery cells 1 in maximum, a positions of the fixing bolt hole 23Ca, the positive connecting terminal 23Cb and the fixing hole 23Cd for the gas exhausting duct are not changed even the number of the battery cells 1 in the block 11 are decreased from 24 to 22 by adding two dummy cells 1C. Therefore, a design change is not necessary. in the constituting elements.

### (Fifth embodiments)

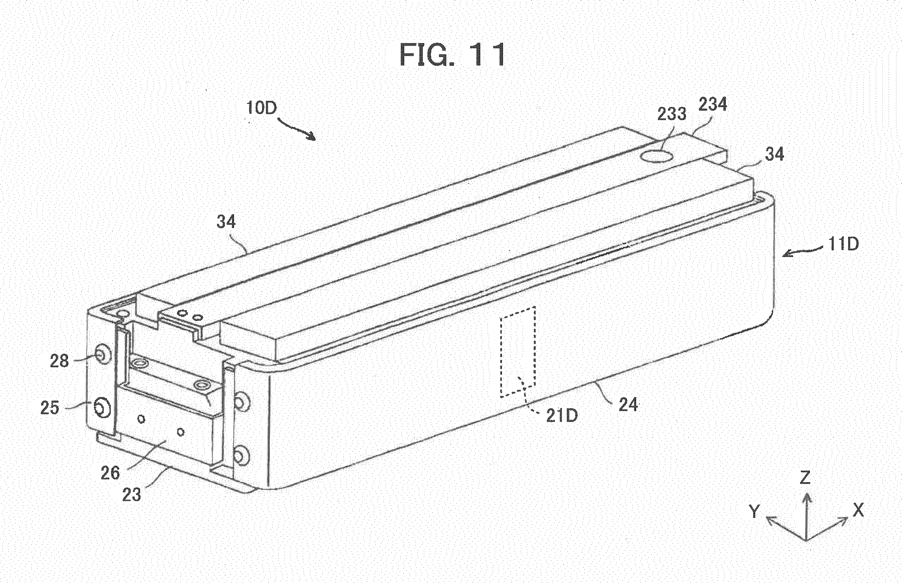

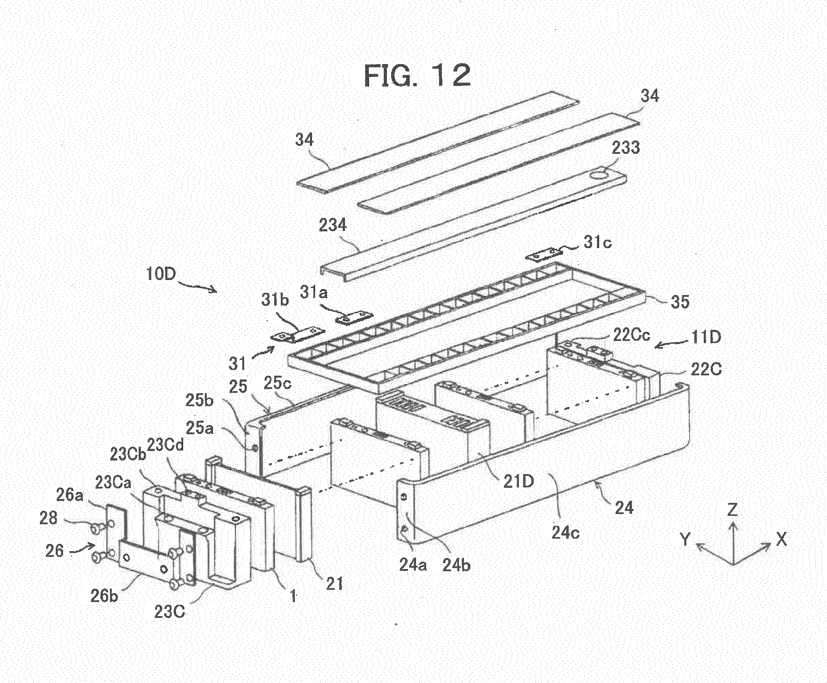

Figure 11 is a perspective view of the battery assembly according to the fifth embodiment, figure 12 is exploded perspective view of the battery assembly according to the fifth embodiment. The feature of the fifth embodiment is an elongated spacer 21D being disposed at the intermediate position in the stacking direction of a plurality of battery cells
As shown in figures 11 and 12, the battery assembly 10D includes block 11D. The block 11D includes a plurality of battery cells 1 stacked in a stacking direction. The elongated spacer 21D is disposed at the intermediate position in the battery cells 1 in the stacking direction of the plurality of battery cells 1.

The elongated spacer 21D has a thickness equivalent to a thickness of n pieces of battery cells 1. For example, if two battery cells 1 are desired to be decreased so as to be 22 battery cells 1 in a block 11, which can include 24 battery cells 1 as maximum, it is attainable by using an elongated spacer 21D having a thickness of two battery cells 1. The elongated spacer 21D is disposed at an intermediate position of alternatively stacked battery cells 1 and the spacers 21; the elongated spacer 21D is disposed at deviated position from the center of the plurality of battery cells 1 in the stacking direction.

A plurality of battery cells 1 are divided into two groups in the stacking direction by the elongated spacer 21D. A bus bar is provided straddling the elongated spacer 21D to connect the battery cells 1 to each other.

The elongated spacer 21D can be formed from two or more elongated spacers. In this case, a total thickness of two or more elongated spacers is thicker than a thickness of one battery cell 1. A thickness of the elongated spacer 21D is thicker than a thickness of other spacers 21; a position of the elongated spacer 21D can be a position other than a center of the stacked cells in stacking direction. For example, one or two elongated spacers 21D can be disposed adjacent to the spacers 21, which are adjacent to the second end spacer 23C or the first end spacer 22.

According to the battery assembly 10D of the present embodiment, when the number of the battery cells 1 is decreased, an elongated spacer 21D having a thickness equivalent to the thickness of the decreased battery cells 1 is used; therefore, a positions of the fixing bolt hole 23Ca, the positive connecting terminal 23Cb and the fixing hole 23Cd for the gas exhausting duct are not changed. Therefore, a design change in sizes or shapes in elements are not necessary.

The battery cell assembly 10 according to the first embodiment through the battery assembly 10D according to the fifth embodiment can be applied to a power source device including single battery assembly battery, or a plurality of battery assemblies electrically connected to each other.

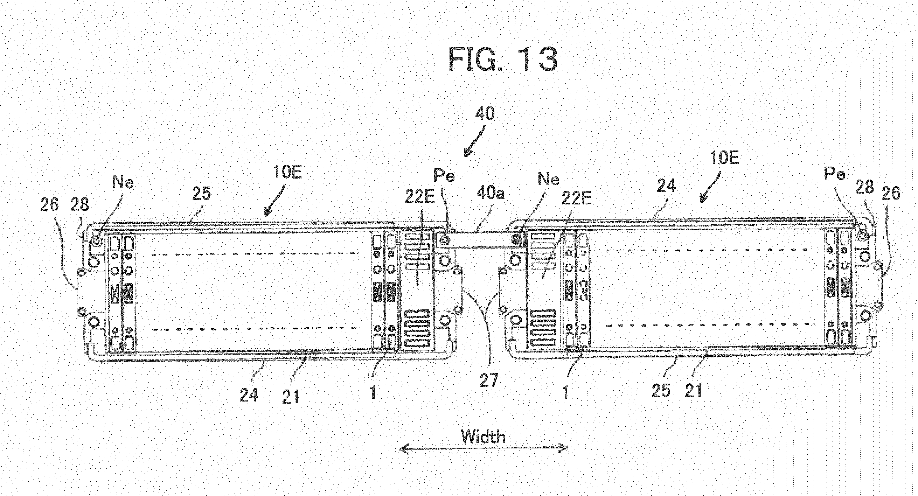

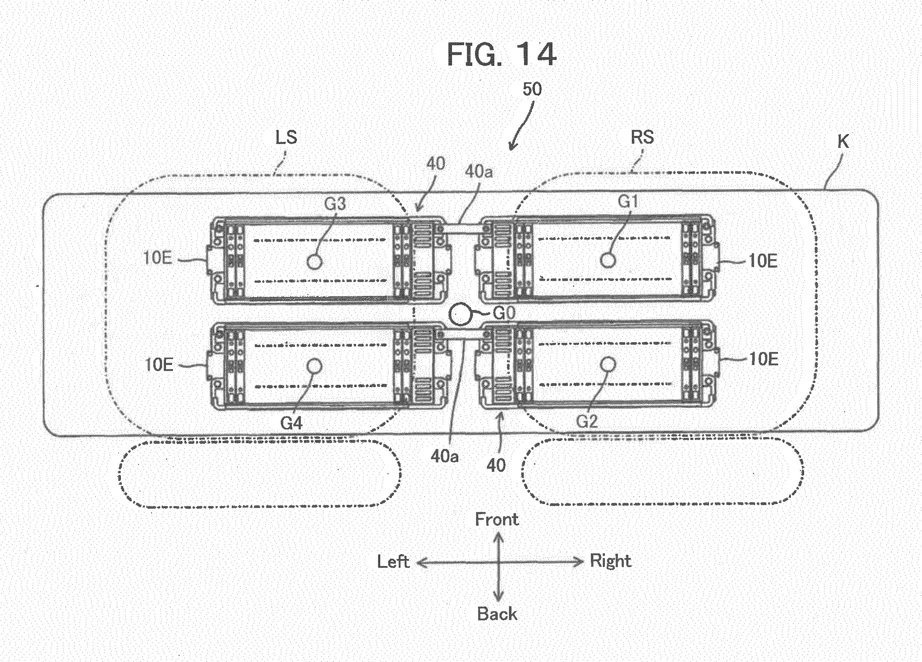

Then, the power source devices 40 and 50, in which a plurality of battery assemblies 10E are arranged in line in a stacking direction of the battery cells 1 are explained referring figures 13 and 14.

Figure 13 is a structure of power source device 40 including two battery assemblies 10E, in which a plurality of a battery cells 1 are stacked; Figure 14 is a structure of power source device 50 including four battery assemblies 10E, in which a plurality of battery cells 1 are stacked.

As shown in figure 13, the power source device 40 includes a bus bar 40a to connect electrically the two battery assemblies 10E to each other. The battery assembly 10E has the same structure as the battery assembly 10 according to the first embodiment. The bus bar 40a connects the positive electrode Pe of one battery assembly 10E with the negative electrode Ne of another battery assembly 10E; the two battery assemblies 10E are connected in series in nearest positions.

In the meantime, the battery assembly 10E corresponds to the first battery assembly or the second battery assembly according to one embodiment of the present invention, the stacking direction of the battery cells 1 corresponds to the first direction, the bus bar 40a corresponds to the first bus bar in one embodiment of the present invention. In the power source device 40, the two battery assemblies 10E can be arranged in a direction orthogonal to the stacking direction of the battery cell 1. In this case, the orthogonal direction corresponds to the second direction of the battery assembly in one embodiment of the present invention. The first end spacer 22E is made thicker by a total thickness of two battery cells 1. As a result, the total thickness of the battery assembly 10 and the total thickness of the battery assembly 10E are the same.

According to this structure, a length of the bus bar 40a can be minimized in the power source device 40. When installing in the vehicle, the two power source devices 40 are installed in the right side and in the left side of the vehicle, so as to straddle the center of the vehicle; for example, one battery assembly 10E is installed under the left hand side seat LS and another battery assembly 10E is installed under the right hand side seat RS. Therefore, balancing of the car can be kept between the right side and the left side.

As shown in figure 14, the power source device 50 includes two power source devices 40, a plate structure K, which is fixed to the floor of the vehicle, not shown, and a plurality of bolts, not shown, to fix the battery assemblies to the plate structure K. The two power source devices 40 are arranged in parallel so that the stacked battery cells 1 oppose to each other. Each of first center of gravity G1, G2, G3 and G4, which are shown by circles, is located at a position deviated from the center of stacked battery cells 1 in the stacked direction, and at the center of the battery assembly 10E in orthogonal direction to the stacking direction.

The second gravity center G0, which is a gravity center G0 of the total power source device 50, is located at the center of the width of the car. The power source device 50 is disposed to straddle the car in the left and right direction as expressed by dash-dot-dash line in figure 14, for example, the left had side of the power source 50 is located under the left hand side seat LS, and the right hand side of the power source device 50 is located under the right hand side seat RS. Therefore, the center of gravity G0 of the power source device 50 is located at a center the left seat and the right seat of the car. In the meantime, the directions of forward, back, left and right are defined when a driver is seated on the seat.

According to this structure, the power source devices 40 are located in parallel to form a total power source device 50, therefore, a space is saved and weight balance is taken as a total.

In the meantime, the structures explained so far referring to figures 1 through 16 can be expressed as below.

### (Expression 1)

A battery assembly including:
a plurality of battery cells stacked in a stacking direction,
a first end component to hold the plurality of battery cells from one end in the stacking direction,
a second end component to hold the plurality of battery cells from another end in the stacking direction, and
a linking component to link the first end component with the second end component,
in which the inking component connects the first end component with the second end component at a connection portion,
the first end component projects to the battery cells from the connection portion by a certain length, and
the certain length is same or larger compared with a thickness of the battery cell in the stacking direction.

### (Expression 2)

A battery assembly including:
a plurality of battery cells stacked in a stacking direction,
a spacer stacked with the plurality of the battery cells, and
a holding component to hold to hold the plurality of the battery cells and the spacer,
in which the holding component holds the plurality of the battery cells and the spacer under predetermined total length in the stacking direction, and
a thickness of the spacer in the stacking direction is same or larger compared with a thickness of the battery cell in the stacking direction.

### (Expression 3)

A battery assembly including:
a plurality of battery cells stacked in a stacking direction,
a pair of end components disposed at both ends of the stacked battery cells in the stacking direction, and
a pair of side components separated from each other in a direction perpendicular to the stacking direction,
in which the end component includes, an end plate and an end spacer which is disposed between the end plate and the battery cell,
the end plate includes one of elements: a connection portion to connect with the side component, a fixing portion to fix the battery assembly to an installing position, a connecting terminal which is connected with the battery cell and connected with outside of the battery assembly, and an exhausting portion to exhaust gas generated in the battery cell to outside, and
a distance in the stacking direction between one of the elements and an opposing surface to the battery cell is larger than a thickness of the battery cell.

### (Expression 4)

A battery assembly including:
a plurality of battery cells stacked in a stacking direction,
a pair of end components disposed at both ends of the stacked battery cells in the stacking direction, and
a pair of side components separated from each other in a direction perpendicular to the stacking direction,
in which the end component includes an end plate and an end spacer which is disposed between the end plate and the battery cell,
the end spacer includes one of elements: a connection portion to connect with the side component, a fixing portion to fix the battery assembly to an installing position, a connecting terminal which is connected with the battery cell and connected with outside of the battery assembly, and an exhausting portion to exhaust gas generated in the battery cell to outside, and
a distance in the stacking direction between one of the elements and an opposing surface to the battery cell is larger than a thickness of the battery cell.

### (Expression 5)

The battery cell according to the expression 3 or the expression 4,
in which the side component has a length which can hold x pieces of battery cells when a regular end component is disposed at an end in one direction of a stacked battery cells, and
at least one end component of the pair of the end components has a thickness lager than a thickness of the regular end component by a thickness of n pieces of the battery cells (n< x).

### (Expression 6)

The battery assembly according to any one of expressions 3 through 5,
in which a thickness lager than a thickness of the regular end component is an integer multiples of a thickness of the battery cell.

### (Expression 7)

The battery assembly according to any one of expressions 3 through 6,
in which the end component includes a plurality of elements disposed in the stacking direction, and
a summation of thickness in the stacking direction of two elements is larger than a thickness of the battery cell in the stacking direction.

### (Expression 8)

A battery assembly including:
a plurality of battery cells stacked in a stacking direction,
end components disposed at both ends of the stacked battery cells in a stacking direction, and
a side component disposed along the stacking direction and connecting the end component,
in which the end component including:
   a first end component disposed at one end in the stacking direction,
   a second end component disposed at another end in the stacking direction,
   the first end component has a first length in the stacking direction and the second end component has a second length in the stacking direction, and
   the first length is longer than a second length by a length of equal to or longer than a summation of a thickness of the second end component and a thickness of the battery cell.

### (Expression 9)

The battery assembly according to the expression 8,
in which the end component includes:
an end plate which is connected with the side component,
an end spacer which is disposed between a first battery cell which is nearest to the end plate among the battery cells, and the end plate,
the end plate or the end spacer includes:
   either one of the first end plate or the first end spacer, and
   either one of the second end plate or a second end spacer,
   in which the first end plate has a length in the stacking direction longer than a summation of a length of the second end plate and a thickness of the battery cell, or
   the first end spacer has a length in the stacking direction longer than a summation of a length of the second end spacer and a thickness of the battery cell.

### (Expression 10)

A power source device for a vehicle including a plurality of battery assemblies according to the expression 8 or the expression 9,
in which the battery assembly including a first battery assembly in which a plurality of battery cells are stacked in a first direction, and a second battery assembly in which battery cells are stacked in the first direction,
the second battery assembly is disposed on a line along the first direction or disposed on a second direction orthogonal to the first direction, and
in the first direction, a first end portion of the first battery assembly, in which the first end component and the first bus bar are located, is nearer to a second end portion of the second battery assembly, in which the another first end component and the another first bus bar are located, than other end portion,

### (Expression 11)

A power source device for a vehicle including a plurality of battery assemblies according to the expression 8 or the expression 9 and structures disposed adjacent to the battery assemblies,
in which a spacer, which is lighter than the battery cell, is disposed nearer to one end than a center in the stacking direction in the battery assembly,
a first gravity center of the battery assembly is nearer to another end opposing to the one end in the stacking direction in the battery assembly, and
a second gravity center of the plurality of the battery assemblies and the structures is located nearer to a center of the vehicle than the first gravity center is in a direction perpendicular to the stacking direction.

### (Expression 12)

A battery assembly including:
a plurality of battery cells stacked in stacking direction,
a spacer stacked with the battery cells,
end components disposed at both ends of the stacked plurality of the battery cells and the spacer, and
a side component extending in the stacking direction and connecting to the end components,
in which the side component has a predetermined length along the stacking direction, and holds the end component, a plurality of the battery cells and the spacer,
the end component includes any one of elements of:
   a connection portion with the side component,
   a fixing portion to fix the battery assembly to an installing position,
   a connecting terminal, which can connect with the battery cell and can connect with an outside of the battery assembly, and
   an exhausting portion to exhaust gas generated in the battery cell to outside,
   the spacer is located between the one of the elements and a battery cell most apart from the one of the elements, and
   a thickness of the spacer in the stacking direction is same or more compared with a thickness of the battery cell in the stacking direction.

### (Expression 13)

A battery assembly including:
a plurality of battery cells stacked in stacking direction,
a plurality of spacers stacked with the battery cells,
end components disposed at both ends of the stacked plurality of the battery cells and the spacers, and
a side component extending in the stacking direction and connecting to the end components,
in which the side component has a predetermined length along the stacking direction, and holds the end component, a plurality of the battery cells and the spacers,
the plurality of the spacers include a first spacer and a second spacer,
a thickness in the stacking direction of the first spacer is thicker than a thickness in the stacking direction of the second spacer,
the first spacer is located nearer to an end of the stacked battery cells than a center of the stacked battery cells in the stacking direction,
the second spacer is located nearer to another end of the stacked battery cells than a center of the stacked battery cells in the stacking direction, and
a difference between a thickness of the first spacer and a thickness of the second spacer in the stacking direction is same or larger than a thickness of the battery cell in the stacking direction.

### (Expression 14)

The battery assembly according to the expression 12 or the expression 13,
in which either one of the first spacer and the second spacer includes two or more spacers between adjacent two battery cells or adjacent to an end battery cell of the stacked battery cells, and
a total thickness of the two or more spacers is thicker than a thickness of the battery cell in the stacking direction.

### (Expression 15)

The battery assembly according to the expression 12 or the expression 13,
in which a thickness of the first spacer has a thickness of same or larger compared with a thickness of the battery cell in the stacking direction,
a width of the first spacer in a first direction in an orthogonal surface to the stacking direction is smaller than a width of the second spacer in a first direction in an orthogonal surface to the stacking direction, or
a width of the first spacer in a second direction perpendicular to the first direction in an orthogonal surface to the stacking direction is smaller than a width of the second spacer in a second direction perpendicular to the first direction in an orthogonal surface to the stacking direction.

Examples of embodiment 1 are explained above, however, the present invention is not limited to those embodiments; design changes are covered by the gist of the claimed invention. For example, the embodiment is explained in detail in embodiments to clarify the invention; however, the invention is not limited by the structure of the embodiments having detailed elements. In addition, a certain element of one embodiment can substitutes a certain element of another embodiment or a certain element of one embodiment can be added to another embodiment. Further, a part of a certain element in one embodiment can be added to, subtracted from or substitute an element of another embodiment, and so forth.

### Embodiment 2

A battery assembly generally includes a block having a stacked battery cells held by a metal plate. A plurality of battery assemblies are installed in a metal container and fixed, then installed in cars and forth as a battery pack.

The structure of the conventional battery assembly is that a side plate formed from metal holds and fastens the stacked battery cells by being connected with the end plate formed from metal and disposed outer most outside of the stacked battery cells. The endplate is fixed in a meal container to form a battery pack. The side plate is electrically connected with the container. However, in a case the battery pack is dipped in the salt water, if the side plate is a bare metal, a short can occur between the side plate, which is connected to earth, and the battery cells, consequently, a rapid reaction arises. Conventionally, insulation process has been added to the side plate to avoid short between the battery cells and the side plate. However, there is a problem that the insulating process of the side plate raises a manufacturing cost.

The structure of the present invention insulates between the battery pack, which is connected to earth, and the side plate, and thus, a current between the battery cells and the side plate is mitigated even the battery pack is dipped in the salt water, and thus can avoid a rapid reaction.

The present invention can be applied to not only the battery assembly according to embodiment 1 but also to other normal battery assemblies. Therefore, the explanation below is made when the present invention is applied to a normal battery assembly. The concrete structures are as follows. The end spacer, which is one of the components to fix the battery assembly to the battery pack, is changed from metal to resin to insulate between the battery pack and the battery cells. Such structure is disclosed in figure 3 and figure 4, paragraphs 0024 through paragraphs 0027 in embodiment 1. A collar formed from metal is inserted in the end plate formed from resin, and the battery assembly and the battery pack are fixed by the bolt through the collar.

The side plate is insulated from the container formed from metal. In other words, since the end spacer is formed from insulating material, the battery cells are insulated from the side plate and the container of the battery cell. Thus, a current between the battery cells and the container of the battery pack is mitigated, and a rapid reaction caused by a large current can be avoided.

In the meantime, a projection rib is formed on the spacer, which is inserted between the battery cells, to keep a distance between the side plate and the battery cells. And thus, to secure the insulation between the side plate and the battery cells.

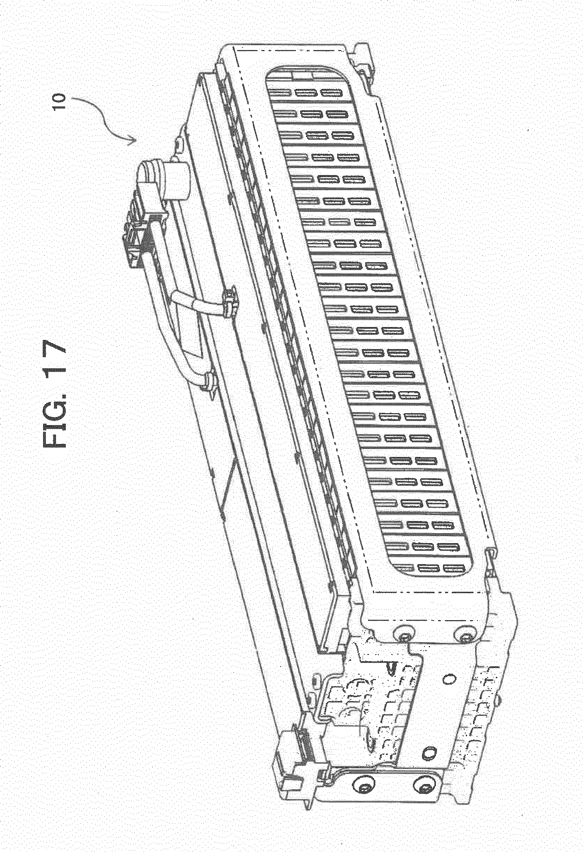

Concrete structure is explained below referring to drawings. Figure 17 is an outer view of the battery assembly 10 according to embodiment 2. The outer view of the battery assembly 10 is essentially the same as the structure and outer view of figure 2 and so forth in embodiment 1. However, application of the structure of embodiment 2 is not limited to the battery assembly 10 of embodiment 1, it is applicable to a normal battery assembly 10. Therefore, the structure of battery assembly 10 is not limited to the structure of embodiment 1.

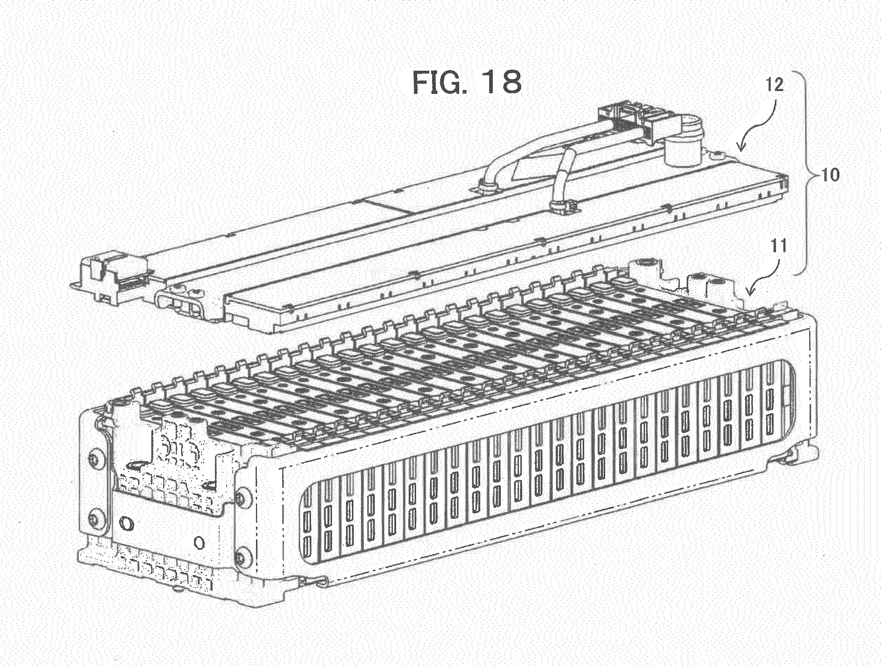

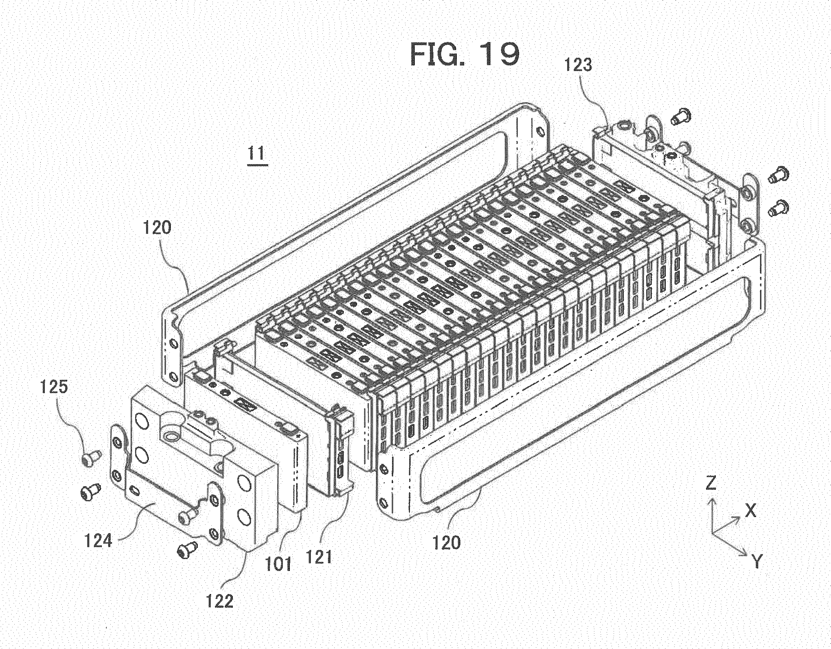

Figure 18 is an exploded perspective view in which the battery assembly of figure 17 is separated into a block 11 and a bus bar case 12. Figure 19 is an exploded perspective view of the block 11. As shown in figure 19, the longer direction of the block 11 is defined as x direction or stacking direction, up and down direction is defined as z direction, and the direction perpendicular to x direction and z direction is defined as y direction.

In the meantime, a harness includes terminal portion, wiring portion, temperature sensing portion and connector portion. The terminal portion is electrically connected with the bus bar and the harness through the wiring portion. The temperature sensing portion contacts the battery cover to detect a temperature of the battery cover, and output the detection result. The connector portion is connected with elements to connect the structure elements with a controller, not shown in the drawing. The harness can be the same as the harness in embodiment 1.

As shown in figure 17 through figure 19, the battery assembly 10 includes the block 11, in which a plurality of the battery cells 101 and components to assemble the battery cells 101 are formed, and harness, which includes connection means to connect terminals to each other between the battery cells, detecting means for monitoring voltages and temperatures, and so forth.

In figure 19, in the block 11, one pair of the side rails 120 are disposed in y direction, the battery cells 101 and the spacers 121 are superposed alternatively in x direction. Adjacent to the battery cells 101 disposed at end portions, a negative end spacer 122 is disposed in the -x direction and a positive end spacer 123 is disposed in the +x direction; the end plates 124 are disposed outside of the positive end spacer 123 and the negative side spacer 122 with a plurality of bolts 125.

The spacer 121, N end spacer (negative end spacer) 122, P end spacer (positive end spacer) 123 are formed from resin, which is insulating material. A plurality of battery cells 101 are held by recess formed in the spacers 121, the N end spacer 122, the P end spacer 123 to fit with the battery cells 101, and the movement of the battery cells 101 in x direction and y direction is suppressed.

End plate 124 is a rectangle steel plate extended in y direction; two nuts are attached by e.g. crimping to the end plate 24.

The side plate 120, which is formed from steel plate, has a flange extending in y direction; the flange has holes penetrated in x direction; the side plate has a large opening in wide surface opposing to another side plate.

A plurality of battery cells 101, spacer 121, N end spacer 122, P end spacer 123 are sandwiched by a pair of end plate 124; this stacked body is pressed by a pair of the side plate 120 to be fastened. The side plate 120 is fixed to the end plate 124 by the bolts 125.

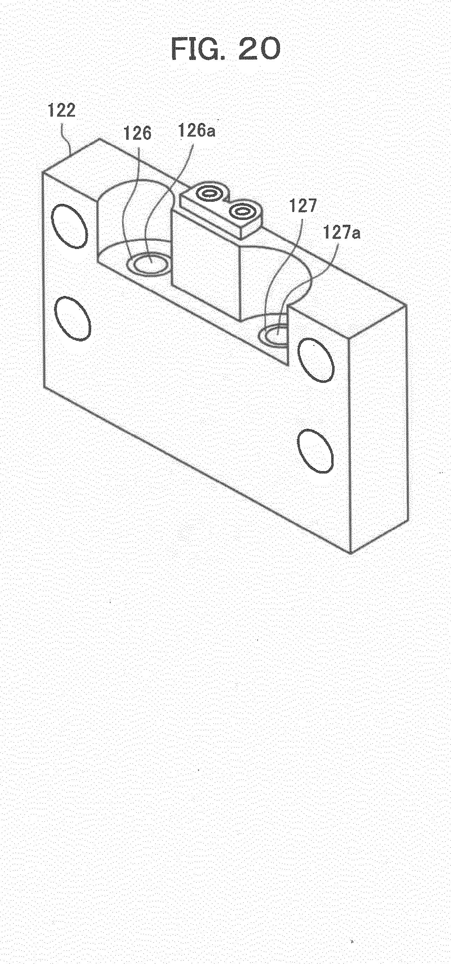

Figure 20 is a perspective view of the N end spacer 122. The N end spacer 122 includes a metal collar 126 which has a through hole 126a and a metal collar 127 which has a through hole 127a for bolts to fix the battery assembly 10 in the container of the battery pack (herein after may be called simply a container). When the block 11 is fixed in the container, the bolts are inserted in the through holes 126a and 127a of the collars 126 and 127.

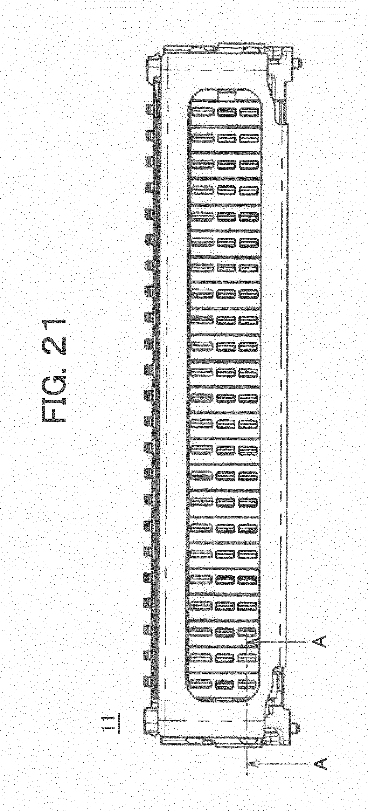

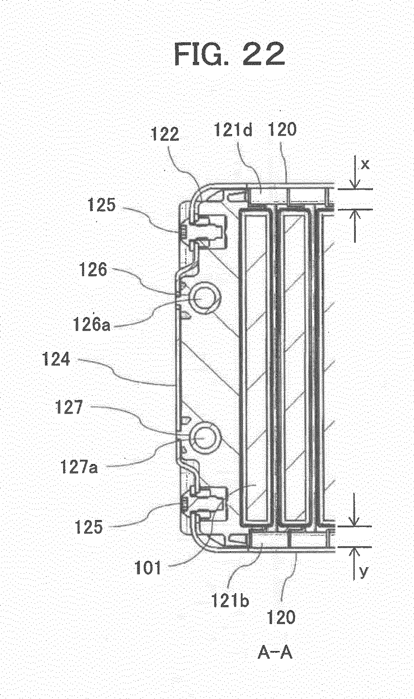

Figure 21 is a side view of the block 11. Figure 22 is a cross sectional view of figure 21 along the line A-A. In figure 22, the side plate 120 and the end plate 124 are contact with a portion of insulating resin of N end spacer 122, but are not contact with the collars 126 and 127. In other words, the side plate 120 and end plate 124 are insulated from the collars 126 and 127. Therefore, the side plate 120 is insulated from the container of the battery pack.

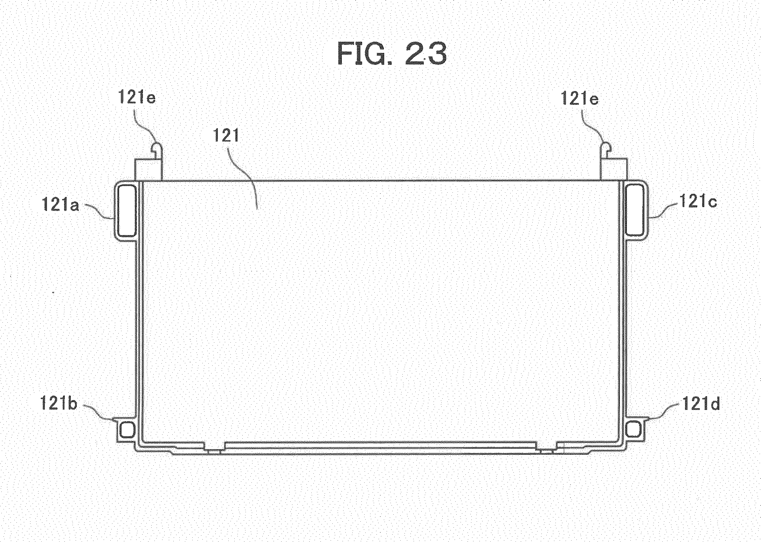

Figure 23 is a front view of the spacer 121. The spacer 121 includes the ribs 121a, 121b, 121c and 121d; the ribs are designed to keep a distance between the battery cell 101 and the side plate 120 in predetermined distance as shown by x and y of figure 22. In other words, the ribs 121a, 121b, 121c and 121d can keep a necessary distance to maintain an insulation between the battery cell 101 and the side plate 120 thoroughly.

According to the above structure, since the side plate 120 is not connected to earth, a current between the side plate 120 and the battery cell 101 can be mitigated and a rapid reaction can be avoided. Further, the connection portion 121e is formed on the top of the spacer, which opposes to the bus bar assembly 12; the connection portion 121e may be a projection having a craw. The bus bar case 35, which opposes to a top of the spacer 121, has a fixing portion to fix the connection portion 121e. In the above example, each of the spacers 121 has the connection portion 121e; however, it is not necessary that every spacer has the connection portion 121e, instead, the spacers 121 having the connection portions 121e can be disposed with some distance with each other. The above described structure contributes to fixing the block 11 and the bus bar case assembly 12. In the above structure, the spacer 121 formed from resin matches the bus bar case 35 formed from resin. Therefore, unnecessary electrical connections between the battery assembly and the surrounding components can be suppressed.

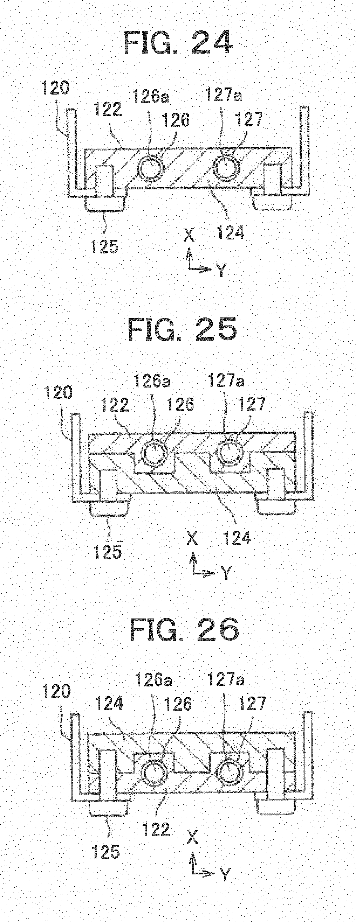

Figure 24 is a cross sectional view of another structure to fasten the battery cells in the stacking direction by the side plate 120 and the end spacer 122. Figure 24 is a model corresponding to the N end spacer 122 and its surroundings. In figure 24, the end spacer 122 formed from resin and the side plate 120 are directly connected with each other. That is to say, in the end plate 122, an insert nut is embedded in a hole in which the bolt 125 is inserted; and thus, the side plate 120 and the end plate 124 are fastened in x direction directly by the bolts 125.

In figure 24, the metal collar 126 having the through hole 126a and the metal collar 127 having the through hole 127a are formed for through bolts in the end spacer 122 to install and to fix the battery assembly in the container of the battery pack. The collar 126, 127, which is in a same potential as the battery pack, and the side plate 120 are insulated each other; therefore, the side plate 120 is insulated from the container of the battery pack. Further, as shown in figure 19, the side plate 120 is insulated from both of the battery pack and battery cells 101. Therefore, a current between the battery cells and the side plate 120 is mitigated and a rapid reaction is avoided even when the battery assembly is dipped in the salt water.

Figure 25 is cross sectional view of another structure to fasten the battery body in the stacking direction by the side plate 120 and the end spacer 122. Figure 25 is a model cross sectional view, which corresponds to end spacer 122 and its vicinity in figure 22. In figure 25, the end plate 124 is not formed from a metal plate, but formed by e.g. aluminum die cast. End plate 124 can be formed into any shape according to aluminum die cast. In figure 25, the end plate 24 is disposed outside of the end spacer 122. In figure 25, in the end plate 124, a thickness of the portion in which the bolts 125 are screwed in is made large, and female screws are directly formed in this portion. Therefore, fastening of end plate 124 and side plate 120 is possible without providing nuts by e.g. crimping. In figure 25, the end plate 124 and the side plate 120 are fastened in x direction by the bolts 125.

In figure 25, too, the metal collar 126 having the through hole 126a and the metal collar 127 having the through hole 127a are formed for through bolts in the end spacer 122 to install and to fix the battery assembly in the container of the battery pack. The collar 126, 127, which is in a same potential as the battery pack, and the side plate 120 are insulated each other. Therefore, a current between the battery cells 101 and the side plate 120 is mitigated and a rapid reaction is avoided even when the battery assembly is dipped in the salt water.

Figure 26 is cross sectional view of yet another structure to fasten the battery cells 101 in the stacking direction by the side plate 120 and the end spacer 122. Figure 26 is a model cross sectional view, which corresponds to end spacer 122 and its vicinity in figure 22. In figure 26, as in figure 25, the end plate 124 is not formed from a metal plate, but formed by e.g. aluminum die cast. Figure 26 differs from figure 25 in that the endplate 124 is disposed inside of the end spacer 122. Since the end plate 124 can be formed in any shape according to aluminum die cast, the end plate 124 can change its form according to a shape of the end spacer 122.

In figure 26, in the end plate 124, a thickness of the portion in which bolts 125 are screwed in is made large, and female screws are directly formed in this portion. Therefore, fastening of end plate 124 and side plate 120 is possible without providing nuts by e.g. crimping. In figure 26, the end plate 124 and the side plate 120 are fastened so as to sandwich the end spacer 124 in x direction by bolts 125.

In figure 26, too, the metal collar 126 having the through hole 126a and the metal collar 127 having the through hole 127a are formed for through bolts in the end spacer 122 to install and to fix the battery assembly in the container of the battery pack. The collar 126, 127, which is in a same potential as the battery pack, and the side plate 120 are insulated each other. Therefore, a current between the battery cells 101 and the side plate 120 is mitigated and a rapid reaction is avoided even when the battery assembly is dipped in the salt water.

### Explanation of co notations

1: battery cell (single battery), 2: battery can, 10, 10A, 10B, 10C, 10D, 10E: battery assembly, 11: block, 12: bus bar case assembly, 21: spacer (second spacer), 21D: elongated spacer (first spacer), 22: first end spacer (regular end component), 22a, 23a, 23Ca, 26Ab, 26Bb, 27Ab: fixing bolt hole, 23, 23A, 23B, 23C: second end spacer (end component), 24, 25: side rail (side component), 26, 26A, 26B, 27, 27A: end plate (end component), 26a: flat portion, 26b, 26Aa, 26Ba, 27Aa: fixing portion, 28: bolt, 31, 40a: bus bar, 233: gas exhaustion portion, 34: cover, 35: bus bar case, 40, 50: power source device, G0: gravity center (second gravity center), G1, G2, G3, G4: gravity center (first gravity center), 101: battery cell (single battery), 120: side plate, 121: spacer, 121a: rib, 121b: rib, 121c: rib, 121d: rib, 122: N end spacer, 123: P end spacer, 124: end plate, 125: bolt, 126: collar, 126a: through hole, 127: collar, 127a: through hole

## Claims

1. A battery assembly comprising:
a battery body, in which a plurality of battery cells are stacked;
a pair of end components, including insulating material, disposed at both ends of the battery body in a stacking direction; and
a pair of side plates, including metal, disposed at both sides of the battery cells of the battery body, and connecting to the end components,
wherein the end component includes a fixing portion, which accommodates a fixing body, to install the battery assembly to an installing body, and
the fixing portion and the side plates are not connected electrically to each other.

2. The battery assembly according to claim 1,
wherein the end component includes a connection portion with the side plate,
a pair of endplates formed from metal, and
a pair of end spacers, formed from an insulating material, include the fixing portion.

3. The battery assembly according to claim 2,
wherein the end plate and the side plate are connected to each other at the connection portion outside the end spacer in the stacking direction, and fasten the plurality battery cells in the stacking direction, and
the side plate is not electrically connected with the fixing body.

4. The battery assembly according to claim 2,
wherein the end plate and the side plate are connected to each other at the connection portion inside the end spacer in the stacking direction, and fasten the plurality of battery cells in the stacking direction, and
the side plate is not electrically connected with the fixing body.

5. The battery assembly according to claim 1,
wherein the side plate fastens a pair of end spacers and the plurality of the battery cells in the stacking direction, and
the side plate is not electrically connected with the fixing body.

6. The battery assembly according to any one of claim 1 through claim 5,
wherein the fixing body is a bolt formed from metal.

7. The battery assembly according to any one of claim 1 through claim 6,
wherein a gap is formed between side surfaces of the stacked battery cells and the side plate, and
the battery cells and the side plate are insulated each other.

8. The battery assembly according to any one of claim 1 through claim 7,
wherein the end component includes the end plate, which is connected with the side plate, and the end spacer sandwiched between the battery cell and the end plate,
the end plate includes one of the following elements of: the connection portion with the side component, a fixing portion to fix the battery assembly to an installing entity, a connection terminal, which is electrically connected with the battery cell and electrically connected with an entity outside the battery assembly, and exhaustion portion to exhaust gas generated in the battery to outside of the battery assembly, and
a length in the stacking direction between one of the elements and a surface opposing to the battery cell is larger than a thickness of the battery cell.

9. The battery assembly according to any one of claim 1 through claim 7,
wherein the end component includes the end plate, which is connected with the side plate, and the end spacer sandwiched between the battery cell and the end plate,
the end spacer includes one of the following elements of: the connection portion with the side component, a fixing portion to fix the battery assembly to an installing entity, a connection terminal, which is electrically connected with the battery cell and electrically connected with an entity out side the battery assembly, and exhaustion portion to exhaust gas generated in the battery to outside of the battery assembly, and
a length in the stacking direction between one of the elements and a surface opposing to the battery cell is larger than a thickness of the battery cell.

10. The battery assembly according to any one of claim 1 through claim 9,
wherein the end component includes a first end component, which is disposed at one end in the stacking direction, and a second end component, which is disposed at another end in the stacking direction, and
in the stacking direction, a length of the first end component is same or longer compared with a summation of a length of the second end component and a thickness of the battery cell.

11. The battery assembly according to any one of claim 1 through claim 10,
wherein the end component includes the end plate connecting with the side plate,
the end spacer disposed between the end plate and a battery cell, which is located nearest to the end plate,
the end plate or the end spacer includes:
a first end plate or a first end spacer disposed at one end, and a second end plate or a second end spacer disposed at another end,
in a stacking direction of the battery cells, the first end plate has a length longer than a summation of a length of the second end plate and a thickness of a single battery cell, or
in a stacking direction of the battery cells, the first end spacer has a length longer than a summation of a length of the second end spacer and a thickness of a single battery cell.

12. A power source device, which includes a plurality of the battery assemblies according to claim 10 or claim 11, used for a vehicle,
the plurality of the battery assemblies include a first battery assembly and a second battery assembly stacked in a first direction which is a same direction as the battery cells in the first battery assembly are stacked,
the second battery assembly is disposed aligned in the first direction, or is disposed in a second direction perpendicular to the first direction,
wherein in the first direction, an end of the first battery assembly, in which the first end component or a first bus bar is located, is nearer than another end of the first battery assembly to an end of the second battery assembly, in which the first end component or the first bus bar are located.
